# FASCICULE DE BREVET EUROPEEN

(11) **EP 2 231 790 B1**
(45) Date de publication et mention de la délivrance du brevet: **30.09.2015**
(21) Numéro de dépôt: 09703465.6
(22) Date de dépôt: 08.01.2009
(51) Int. Cl.: B05D 7/16

(54) **REVETEMENT ANTICORROSION NANOSTRUCTURE, STRUCTURE LE COMPRENANT, PROCEDE DE PROTECTION ANTICORROSION D'UN SUBSTRAT**
NANOSTRUKTURIERTE ANTIKORROSIONSBESCHICHTUNG, STRUKTUR DAMIT UND VERFAHREN ZUM KORROSIONSSCHUTZ EINES SUBSTRATS
NANOSTRUCTURED ANTI-CORROSION COATING, STRUCTURE INCLUDING SAME AND METHOD FOR ANTI-CORROSION PROTECTION OF A SUBSTRATE

(30) Priorité: 14.01.2008 FR 0850196
(43) Date de publication de la demande: 29.09.2010
(73) Titulaire: Airbus Group SAS, 31700 Blagnac (FR); Université Catholique de Louvain, 1348 Ottignies Louvain-la-Neuve (BE)
(72) Inventeur: CAMPAZZI, Elisa, F-92100 Boulogne Billancourt (FR); JONAS, Alain, B-1348 Louvain-la-neuve (BE); NYSTEN, Bernard, B-5030 Sauveniere (BE); BURHIN, Cédric, B-1320 Beauvechain (BE)
(74) Mandataire: Dossmann, Gérard
(86) Numéro de dépôt international: PCT/FR2009/050022
(87) Numéro de publication internationale: WO 2009/092940

(56) Documents cités:
- EP-A- 0 065 609
- WO-A-03/014234
- US-A- 4 836 768
- US-A1- 2003 027 011
- US-A1- 2005 103 229
- DATABASE WPI Week 200736 Thomson Scientific, London, GB; AN 2007-378339 XP002490621 & CN 1 903 956 A (UNIV SHANGHAI) 31 janvier 2007 (2007-01-31)

## Description

La présente invention concerne un revêtement anticorrosion nanostructuré et une structure le comprenant, qui sont destinés à être utilisés dans des applications aéronautiques et aérospatiales, un procédé de protection anticorrosion d'un substrat métallique ou non métallique.

Dans le domaine aéronautique, la protection contre la corrosion est généralement assurée par des revêtements à base de chrome VI déposés, par exemple, par oxydation anionique en bain.

Cependant, plusieurs études ont démontré la nocivité du chrome VI, notamment sa toxicité, son caractère cancérigène ainsi que sa toxicité pour l'environnement.

Le remplacement des sels de chrome hexavalent dans les formulations et l'obtention de produits permettant de garder les mêmes caractéristiques et performances des couches réalisées représentent un énorme enjeu pour l'industrie aéronautique.

Il existe donc un besoin de trouver un autre système assurant une protection contre la corrosion et qui soit au moins aussi performant que ceux existant et ne présentant pas de toxicité.

Plusieurs solutions techniques de remplacement existent parmi lesquelles on peut citer la technologie de dépôt couche-par-couche (Layer-by-Layer ou « Ibl »).

La demande internationale WO 03/014234 décrit un revêtement protecteur obtenu par cette technologie à partir de solutions de polyélectrolytes. Les couches peuvent être déposées soit par utilisation alternée de solutions de polyélectrolyte anionique et de polyélectrolyte cationique, soit par utilisation d'une solution comprenant les polyélectrolytes anionique et cationique.

Ce revêtement peut contenir en outre des additifs, notamment pour améliorer la résistance à l'abrasion.

Cependant, le renfort inorganique co-adsorbé sert uniquement de renfort mécanique et n'a pas de rôle actif anticorrosion.

Le document US 2003/0027011 divulgue un article comprenant un substrat métallique et un revêtement anticorrosion qui comprend des couches alternées d'espèces organiques et inorganiques, déposées par la technologie dite « lbl ». Ce revêtement comprend en outre un agent inhibiteur de corrosion ou agent anticorrosion.

Cependant, l'agent anticorrosion est incorporé a posteriori dans la couche, ce qui est coûteux en temps et ne permet pas d'envisager la création aisée de films multicompartimentés et multifonctionnels.

Le demandeur a découvert que l'utilisation d'une multicouche de polyélectrolyte(s) dopée avec au moins un agent anticorrosion associée à une multicouche barrière particulière permettait d'améliorer la résistance à la corrosion de substrats de préférence métalliques. Cette multicouche dopée avec au moins un agent anticorrosion et délimitée par cette multicouche barrière, constituent un compartiment principal.

Ces multicouches à base de polyélectrolyte(s) sont déposées selon la technologie dite « lbl » par exemple, par trempage-retrait (ou dip-coating), dépôt sur substrat en rotation (ou spin-coating), aspersion, pulvérisation, enduction laminaire et dépôt au pinceau, et permettent d'obtenir des films homogènes, couvrants et sans défauts, dont l'épaisseur est généralement comprise entre 1 et 100 nm, mais pouvant atteindre plusieurs micromètres sous certaines conditions de dépôt. Cette technologie permet de contrôler finement l'épaisseur des couches déposées.

En outre, les composés utilisés pour obtenir de tels films présentent une moindre toxicité et la mise en oeuvre est aisée. Ces composés présentent l'avantage supplémentaire d'être compatibles avec la réglementation environnementale, et notamment d'être utilisés majoritairement en milieu aqueux.

De plus, un revêtement comprenant un tel compartiment principal peut comprendre en outre au moins un autre agent fonctionnel différent d'un agent anticorrosion, ou bien au moins un autre compartiment dénommé « compartiment secondaire », dans lequel l'agent anticorrosion est remplacé par un autre agent fonctionnel. Cela permet d'obtenir un revêtement à un seul ou à plusieurs compartiments, qui est polyfonctionnel, c'est-à-dire pouvant présenter d'autres propriétés qu'une résistance à la corrosion, telles qu'une résistance mécanique, une résistance aux rayures et aux frottements, une coloration, un caractère hydrophobe, une biocompatibilité et/ou un caractère bactéricide, tout en présentant une bonne adhérence sur un substrat métallique.

Ces revêtements permettent ainsi la coexistence de plusieurs fonctionnalités différentes.

Par agent fonctionnel, on entend au sens de la présente invention un agent conférant une propriété telle qu'une résistance à la corrosion, une résistance mécanique, une résistance aux rayures et aux frottements, une coloration, un caractère hydrophobe, une biocompatibilité et/ou un caractère bactéricide.

La présente invention a donc pour objet un revêtement anticorrosion nanostructuré à base de polyélectrolytes, comprenant au moins un compartiment principal qui comporte :
- une multicouche de polyélectrolyte(s) dopée avec au moins un agent anticorrosion, et
- une multicouche supérieure jouant le rôle de barrière à la diffusion des agents dopants, déposée selon la technologie couche-par-couche, et dont la surface supérieure correspond à la surface supérieure du compartiment principal.

Par revêtement nanostructuré, on entend un revêtement dont la structure est contrôlée à l'échelle nanométrique. Cette structure peut être vérifiée notamment par réflectométrie de rayons X et diffusion des rayons X aux petits angles, microscopie à transmission (ou TEM) ou microscopie à force atomique (ou AFM).

Par agent dopant, on entend au sens de la présente invention, une espèce chimique minoritaire par rapport au(x) polyélectrolyte(s) formant la multicouche dopée. L'agent dopant permet notamment de conférer une propriété particulière à la multicouche dopée. Le(s) agent(s) dopant(s) dans le compartiment principal est (ou sont) le ou les agent(s) anticorrosion, et éventuellement tout agent fonctionnel différent d'un agent anticorrosion tel que décrit ci-dessous. Dans le(s) compartiment(s) secondaire(s), le(s) agent(s) dopant(s) est (ou sont) tout agent fonctionnel différent d'un agent anticorrosion tel que décrit ci-dessous.

De préférence, au moins l'un des agents anticorrosion se présente sous la forme de nanoparticules d'oxyde métallique ou de sel métallique, encore plus préférentiellement d'oxyde métallique, présentant, par exemple, une taille allant de 1 à 50 nm, mieux de 2 à 10 nm, telle que mesurée par TEM.

A titre d'exemples de nanoparticules, on peut notamment citer les nanoparticules d'oxyde de cérium, d'oxyde de manganèse, d'oxyde de cobalt, d'oxyde de phosphate, d'oxyde de zinc, d'oxyde de molybdène ou d'oxyde de vanadium, ou de sels de terres rares tels que Ce, Nd, Pr, La, Sm, ou leurs mélanges.

D'autres agents anticorrosion peuvent être ajoutés par simple co-adsorption, tels que des agents organiques comme le sébaçate de sodium, le phtalate de potassium, l'hydroxyapatite, le benzoate et l'acétate de sodium, l'hydroxyquinoline, la méthylphénothiazine, les azoles tels que, par exemple, le benzotriazole ou le tolylazole, ou la tétrachloro-p-benzoquinone (ou chloranil).

La multicouche de polyélectrolyte(s) dopée avec au moins un agent anticorrosion comprend un polyélectrolyte anionique ou un polyélectrolyte cationique, ou encore une alternance de couches de polyélectrolytes anionique et cationique.

Par exemple, cette multicouche de polyélectrolyte(s) dopée avec au moins un agent anticorrosion peut être réalisée par dépôts successifs d'un polyélectrolyte cationique (ou anionique) et d'un agent anticorrosion sous la forme de nanoparticules d'oxyde métallique chargées négativement (ou positivement).

Un autre exemple consiste à co-déposer l'agent anticorrosion en même temps que les polyélectrolytes anioniques ou cationiques.

Le dépôt alternatif d'un polyélectrolyte cationique et d'un polyélectrolyte anionique en même temps que des nanoparticules jouant le rôle d'inhibiteur de corrosion, présente l'avantage de permettre la dispersion de nanoparticules neutres ou chargées positivement ou négativement. Un tel mode de réalisation présente en outre l'avantage de permettre une réticulation du polyélectrolyte cationique et du polyélectrolyte anionique, en présence d'un agent de réticulation. Une couche ainsi réticulée permet, entre autres, de limiter la mobilité des nanoparticules piégées.

De préférence, la multicouche de polyélectrolyte(s) dopée avec au moins un agent anticorrosion comprend un polyélectrolyte cationique.

Dans un mode de réalisation de l'invention, le compartiment principal peut comprendre en outre une couche inférieure jouant le rôle de barrière à la diffusion des espèces dopées et dont la surface inférieure correspond à la surface inférieure du compartiment.

Le compartiment principal peut comprendre en outre au moins un agent fonctionnel différent d'un agent anticorrosion. Ce ou ces autres agents fonctionnels peuvent être contenus dans la même multicouche que l'agent anticorrosion ou ils peuvent être contenus dans une ou plusieurs autres multicouches de polyélectrolytes, ou encore ces deux cas sont possibles dans un même revêtement.

Un agent fonctionnel différent d'un agent anticorrosion, utilisé dans le revêtement selon l'invention, est un agent conférant une propriété au compartiment qui est différente de la résistance à la corrosion, telle que, par exemple, une résistance aux rayures et frottements, une tenue mécanique, un caractère hydrophobe, une coloration ou un effet bactéricide.

A titre d'exemples d'agent fonctionnel conférant une résistance aux rayures et frottements et/ou une tenue mécanique à la couche, on peut notamment citer les alcoxydes de titane ou d'aluminium, des nanoparticles de silice ou d'alumine, des oxydes de titane ou de zirconium, des plaquettes ou feuillets d'argile exfoliée, des nanotubes de carbone ou des nanoparticules inorganiques ou céramiques.

A titre d'exemples d'agent fonctionnel conférant un caractère hydrophobe, on peut notamment citer les oxydes de zirconium, des polymères ou des copolymères fluorés.

A titre d'exemples d'agent fonctionnel conférant une coloration, on peut notamment citer les pigments ou les colorants organique ou inorganiques comme le Bleu de Nile, les coumarines, les fluoréscéines, les phtalocyanines ou des pyrènes.

A titre d'exemples d'agent bactéricide, on peut notamment citer des peptides anti-bactériens et des sels métalliques comme des sels d'argent.

Le revêtement anticorrosion nanostructuré selon l'invention peut comprendre en outre un ou plusieurs compartiments secondaires, comportant chacun :
- une multicouche de polyélectrolyte(s) dopée avec au moins un agent fonctionnel différent d'un agent anticorrosion, tel que ceux cités ci-dessus, et
- une multicouche supérieure jouant le rôle de barrière à la diffusion des agents dopants, et dont la surface supérieure correspond à la surface supérieure du compartiment secondaire.

Les multicouches jouant le rôle de barrière à la diffusion des agents dopants décrites ci-dessus comprennent de préférence un polyélectrolyte anionique et un polyélectrolyte cationique réticulés. Une méthode préférentielle consiste à utiliser des polyacides et des polyamines, et de les réticuler pour former des liaisons amides.

Ces multicouches de barrière permettent de limiter pratiquement complètement, voire complètement, la diffusion des agents dopants entre les compartiments fonctionnels principal et secondaires, et entre les compartiments secondaires.

Il existe diverses manières de réticuler des multicouches de polyélectrolytes, par exemple par voie thermique, ou en présence d'un ou de plusieurs agents de réticulation. La réticulation peut se faire en présence d'un agent de réticulation choisi en fonction de la nature chimique des polyélectrolytes, par exemple, d'un agent d'amidation comme le 1-éthyl-3-diméthylaminopropyl carbodiimide et le N-hydroxysuccinimide dans le cas du poly(acide acrylique) et du poly(allyl amine). D'autres exemples d'agent de réticulation sont des agents d'éthérification, comme, par exemple, l'acétonitrile ou le N,N-diméthylformamide, ou d'imidation, comme, par exemple, la 2-pyridone ou la 2-oxazoline.

La multicouche barrière est réalisée par dépôt alterné d'un polyélectrolyte cationique et d'un polyélectrolyte anionique en présence d'un ou de plusieurs agents de réticulation.

A titre d'exemples de polyélectrolytes cationiques utilisables dans le revêtement de l'invention, on peut citer des polymères à groupements amines comme un poly(chlorhydrate d'allylamine), un poly(éthylène imine) ou le chitosane ; des polymères à groupements ammonium quaternaire tels qu'un poly(chlorure de diallyldiméthylammonium) et un poly(chlorure de vinylbenzyl-triméthylammonium) ; et des polymères à groupements pyridine ou pyridinium comme une poly(N-méthylvinylpyridine).

A titre d'exemples de polyélectrolytes anioniques utilisables dans le revêtement de l'invention, on peut citer des polyacides tels qu'un poly(acide acrylique) ou un poly(acide méthacrylique) ; des polymères à groupements sulfonate comme un (poly(styrène-sulfonate), un poly(sulfonate de vinyle) ou un poly(éther-éther-cétone) sulfoné ; des polymères à groupements sulfates, en particulier un poly(sulfate de vinyle) ; des polymères à groupements phosphonates ou phosphates ; et des polysaccharides anioniques.

Le revêtement anticorrosion peut comprendre en outre une couche favorisant l'adhérence d'un traitement de surface ultérieur. Cette couche est de préférence à base d'un polyélectrolyte comme, par exemple, un de ceux cités ci-dessus.

Par traitement de surface ultérieur, on entend au sens de la présente invention une couche primaire de peinture, constituée d'une matrice organique chargée, généralement à base époxy. La couche primaire de peinture est généralement protégée par la peinture de finition, à base époxy ou polyuréthane. Cette dernière couche assure notamment la barrière physique aux agressions de l'environnement, climats extrêmes, UV et polluants divers, et la décoration.

De plus, la présence d'un revêtement multicouche sous-jacent à la couche de traitement de surface ultérieur permettra de renforcer en particulier les propriétés globales de protection contre la corrosion.

Le revêtement tel que décrit ci-dessus est de préférence utilisé pour améliorer la résistance à la corrosion, à la rayure aux rayures et aux frottements, la tenue mécanique, le caractère hydrophobe et/ou la coloration d'un substrat dans le domaine aéronautique ou aérospatial. Un autre objet de l'invention est une structure comprenant :
- un substrat, et
- un revêtement anticorrosion nanostructuré à base de polyélectrolytes tel que défini ci-dessus.

Le substrat peut être métallique ou non-métallique.

Le substrat métallique pouvant être utilisé dans la présente invention est de préférence en aluminium ou un de ses alliages comme, par exemple, l'aluminium de la famille 2000, plus particulièrement l'Al 2024 plaqué ou non plaqué, l'aluminium de la famille 7000, et encore plus particulièrement l'Al 7075 ou 7175 et l'aluminium de la famille 6000 ou 5000, ou en titane ou en magnésium.

A titre d'exemples de substrat non-métallique, on peut notamment citer les substrats composites, tels que les matières plastiques renforcées avec des fibres de carbone (ou "carbon fiber reinforced plastics" (CFRP)) comme, par exemple, les thermodurs ou les thermoplastiques.

Dans le cadre de structures aéronautiques composées de plusieurs matériaux, le revêtement tel que décrit dans la présente invention est compatible avec tous les substrats cités ci-dessus. Par exemple, il apportera à ces substrats une propriété de renforcement de l'interface substrat/primaire de peinture.

La structure peut comprendre en outre une couche d'adhésion au substrat, à base de polyélectrolyte, entre le substrat et le revêtement anticorrosion. L'adhésion au substrat se fait non seulement via les interactions électrostatiques, mais peut se faire aussi par des interactions chimiques telles que, par exemple, des liaisons par complexe organométallique avec le substrat. Cette couche d'adhésion au substrat peut comprendre un polyélectrolyte cationique ou anionique tel que, par exemple, choisi parmi ceux définis ci-dessus, et de préférence, choisi parmi les polyélectrolytes anioniques et mieux un poly(acide acrylique).

Un autre objet de l'invention est l'utilisation du revêtement selon l'invention, pour améliorer la résistance à la corrosion, aux rayures et aux frottements, la tenue mécanique, le caractère hydrophobe et/ou la coloration d'un substrat métallique ou non métallique, dans le domaine aéronautique ou aérospatial.

L'invention a encore pour objet un procédé de réalisation d'une structure telle que définie ci-dessus. Ce procédé de réalisation comprend des étapes de préparation d'un compartiment principal, au cours desquelles :
(a) on dépose une multicouche de polyélectrolyte(s) dopée avec au moins un agent anticorrosion sur un substrat, selon la technologie couche-par-couche, et
(b) on dépose une multicouche supérieure jouant le rôle de barrière à la diffusion des agents dopants, selon la technologie couche-par-couche.

Le procédé selon l'invention peut comprendre en outre une étape avant l'étape (a), au cours de laquelle on dépose une couche d'adhésion au substrat.

Dans ce procédé, il est également possible de doper avec au moins un agent fonctionnel différent d'un agent anticorrosion, la multicouche de polyélectrolyte(s) dopée avec au moins un agent anticorrosion, par exemple par co-adsorption.

Le procédé selon l'invention peut comprendre en outre des étapes de préparation d'un compartiment secondaire, au cours desquelles :
(c) on dépose une multicouche dopée avec au moins un agent fonctionnel différent d'un agent anticorrosion sur une multicouche de barrière réalisée, par exemple à l'étape (b) ou (d), selon la technologie couche-par-couche, et
(d) on dépose une multicouche supérieure jouant le rôle de barrière à la diffusion des agents dopants, selon la technologie couche-par-couche,
ces deux étapes (c) et (d) étant répétées une fois ou plusieurs fois, c'est-à-dire autant de fois qu'il y a de fonctionnalités supplémentaires à conférer à la couche.

Le procédé selon l'invention peut comprendre aussi une étape dans laquelle on dépose une couche favorisant l'adhérence d'un traitement de surface ultérieur.

Dans ce procédé de réalisation d'une structure telle que définie ci-dessus, chaque multicouche est déposée à l'aide du procédé comprenant les étapes suivantes, qui consistent à :
(i) préparer :
   - une première solution aqueuse ou contenant un ou des solvants polaires tels que l'éthanol, l'isopropanol ou le diméthylsulfoxide, de préférence une solution aqueuse, la première solution comprenant un polyélectrolyte, et
   - une deuxième solution aqueuse ou contenant un ou des solvants polaires comme l'éthanol, l'isopropanol ou le diméthylsulfoxide, de préférence une solution aqueuse, la deuxième solution comprenant au moins un agent dopant de charge opposée au polyélectrolyte de la première solution, un polyélectrolyte de charge opposée au polyélectrolyte de la première solution, ou encore un de leurs mélanges,
(ii) faire adsorber une couche de la première solution préparée dans l'étape (i), sur la surface à couvrir,
(iii) rincer la surface dans le solvant utilisé pour la première solution afin d'éliminer l'excès de première solution,
(iv) faire sécher la couche, notamment de façon thermique, par un jet de gaz neutre tel que l'azote ou de l'air comprimé filtré, ou en combinant les deux techniques,
(v) déposer une deuxième solution préparée dans l'étape (i),
(vi) rincer dans le solvant utilisé pour la deuxième solution afin d'éliminer l'excès de deuxième solution,
(vii) faire sécher, notamment de façon thermique, par un jet de gaz neutre tel que l'azote ou de l'air comprimé filtré, ou en combinant les deux techniques,
(viii) répéter les étapes (ii) à (vii), et
(ix) éventuellement à exécuter une dernière fois les étapes (ii) à (iv), jusqu'à obtenir l'épaisseur souhaitée.

De préférence, on répète les étapes (ii) à (vii) (étape (viii)) de 1 à 20 fois, mieux de 1 à 10 fois, et encore plus particulièrement de 5 à 10 fois. Cette répétition et l'éventuelle exécution finale des étapes (ii) à (iv) (étape (ix)) permettent d'obtenir une épaisseur de multicouche allant de préférence de 2 à 100 nm, mieux encore de 2 à 50 nm.

Les étapes (ii), (iii), (v) et (vi) décrites ci-dessus sont notamment effectuées par trempage-retrait, pulvérisation, aspersion ou dépôt sur substrat en rotation.

Les concentrations de polyélectrolyte(s) dans les solutions préparées dans l'étape (i), exprimées en monomères, peuvent être comprises dans l'intervalle allant de préférence de 10⁻³ à 5x10⁻² mol/l (ou M).

Les concentrations d'agent(s) dopant(s) éventuellement présent(s) dans la deuxième solution préparée dans l'étape (i), peuvent être comprises dans l'intervalle allant de préférence de 10 à 50 g/l, mieux encore de 30 à 40 g/l.

De préférence, la couche d'adhésion au substrat et la couche favorisant l'adhérence d'un traitement de surface ultérieur sont déposées en suivant les étapes (i) à (iv) telles que définies ci-dessus. Elles présentent de préférence une épaisseur allant de préférence de 1 à 20 nm, mieux encore de 1 à 10 nm.

D'autres buts, caractéristiques et avantages apparaîtront à la lecture de la description suivante donnée uniquement en tant qu'exemple non limitatif et faite en référence aux dessins annexés sur lesquels :
- la figure 1 illustre un mode de réalisation d'un revêtement anticorrosion nanostructuré selon l'invention,
- la figure 2 illustre un mode de réalisation d'un revêtement anticorrosion nanostructuré déposé sur un substrat métallique, et
- la figure 3 illustre un mode de réalisation d'une structure selon l'invention.

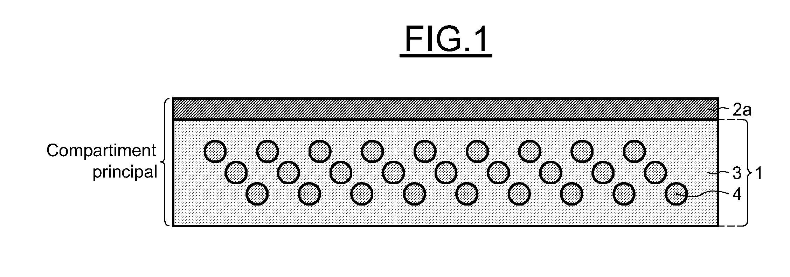

Un revêtement anticorrosion nanostructuré à base de polyélectrolytes peut être constitué par la répétition d'une unité élémentaire, appelée compartiment principal. Tel qu'illustré sur la figure 1, le compartiment principal comprend une multicouche 1 dopée en agents anticorrosion et une multicouche 2a de barrière à la diffusion des agents anticorrosion.

La multicouche 1 dopée en agent anticorrosion comprend une matrice 3 de polyélectrolyte(s) dans laquelle est piégé un agent anticorrosion 4 sous la forme de nanoparticules présentant de préférence une taille allant de 1 à 50 nm, mieux de 2 à 10 nm. L'agent anticorrosion 4 est ici l'agent dopant.

Par exemple, cette multicouche 1 de polyélectrolyte dopée avec au moins un agent anticorrosion peut être réalisée par dépôt successif d'un polyélectrolyte cationique comme un poly(chlorhydrate d'allylamine), et d'un agent anticorrosion sous la forme de nanoparticules d'oxyde métallique chargées négativement.

La multicouche 2a de barrière à la diffusion des agents dopants comprend des polyélectrolytes réticulés.

La multicouche 2a de barrière à la diffusion des agents dopants est généralement réalisée par un dépôt alterné d'un polyélectrolyte cationique et d'un polyélectrolyte anionique en présence d'un agent de réticulation. L'agent de réticulation permet de créer des ponts maintenus par des liaisons covalentes entre les chaînes de deux polyélectrolytes de charge opposée. Cette couche conduit à l'obtention d'un compartiment à perméabilité réduite. Une telle multicouche 2a permet de limiter la diffusion des nanoparticules de la multicouche anticorrosion vers les autres multicouches fonctionnelles.

Le ou les agents de réticulation sont soit co-adsorbés durant toutes les étapes de dépôt, soit durant certaines d'entre elles. La couche de barrière à la diffusion peut être réalisée en alternant, par exemple, le dépôt d'un poly(acide acrylique) (PAA) et d'un poly(chlorhydrate d'allylamine) (PAH) en présence d'agent(s) de réticulation tel(s) que le 1-éthyl-3-diméthylaminopropyl carbodiimide (EDC) ou le N-hydroxysuccinimide (NHS).

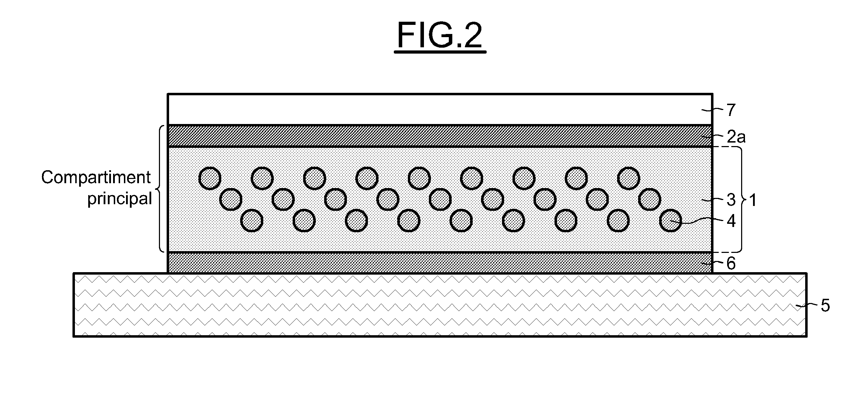

Ce revêtement anticorrosion nanostructuré peut être déposé sur un substrat métallique. Il est alors souhaitable de favoriser de bonnes interfaces, d'une part entre le revêtement anticorrosion nanostructuré et le substrat, et d'autre part entre le revêtement anticorrosion nanostructuré et les couches ultérieures de traitement. Cela est illustré sur la figure 2.

Pour cela, une couche 6 d'adhésion entre le substrat 5 et le revêtement anticorrosion nanostructuré selon l'invention est intercalée.

La face supérieure de ladite couche 6 d'adhésion présente des propriétés compatibles avec l'élaboration du revêtement anticorrosion nanostructuré. La face inférieure de ladite couche 6 d'adhésion forme des liaisons avec les atomes de surface du substrat 5. Lesdites liaisons sont généralement de type électrostatique ou de complexation. Il est à noter que selon les natures chimiques du substrat 5 et du polyélectrolyte utilisé pour la formation de la couche 6 d'adhésion, des liaisons par complexe organométallique avec les atomes pendants de la surface du substrat peuvent être obtenues. Dans ce cas, l'interaction entre la couche 6 d'adhésion et le substrat 5 est meilleure. Par exemple, la couche 6 est constituée d'un polyélectrolyte anionique comme un poly(acide acrylique) (PAA).

La protection d'un substrat, par exemple métallique, est généralement suivie d'autres procédés, par exemple un procédé de mise en peinture. Afin d'assurer la compatibilité du revêtement anticorrosion nanostructuré avec de tels traitements ultérieurs, une couche 7 favorisant l'adhérence de couches de traitement ultérieur est déposée sur la face supérieure du revêtement anticorrosion nanostructuré.

La face supérieure de la couche 7 favorisant l'adhérence de couches de traitement ultérieur peut être adaptée de façon à présenter des propriétés favorisant le dépôt des couches de traitement ultérieures. Elle peut ainsi présenter, par exemple, un caractère hydrophobe ou hydrophile, une affinité chimique, un caractère polaire ou protique, des groupements chimiques particuliers favorisant une polymérisation ou une réticulation, des propriétés de dureté ou de résistance mécanique. La couche 7 peut comprendre des polymères adaptatifs, c'est-à-dire exhibant une réponse prédéfinie en fonction d'une contrainte environnementale comme une variation du pH, de la température, de la force ionique ou de la luminosité. La couche 7 ainsi obtenue réagit à un milieu donné et change de caractéristiques morphologiques ou relargue son dopant de manière contrôlée. De tels polymères adaptatifs sont notamment décrits dans S. A. Sukhishvili, Curr. Opin. Coll. Interf. Sci. 2005, 10, 37-44. A titre d'exemples, on peut notamment citer les polyamines et les polyacides qui sont sensibles au pH ; des copolymères contenant des séquences polyélectrolytes et des séquences thermo-répondantes comme le poly(isopropylacrylamide), des polysaccharides comme les carraghénanes, ou le poly(méthacrylate du méthyléther de diéthylène glycol), ou encore le poly(vinyl éther méthylique).

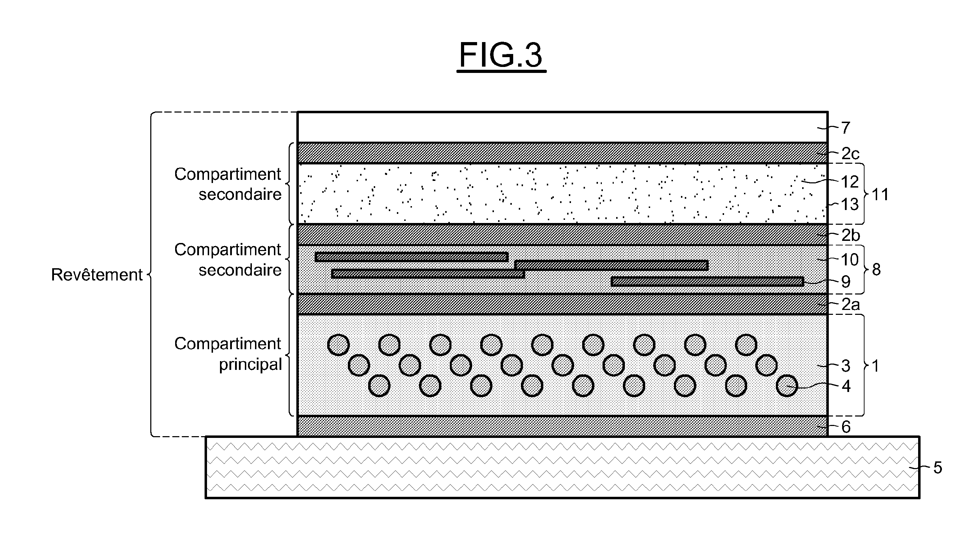

La figure 3 illustre un autre mode de réalisation dans lequel le revêtement anticorrosion nanostructuré comprend en plus du compartiment principal, deux compartiments secondaires. Un premier compartiment secondaire comprend les multicouches 8 et 2b, le deuxième compartiment secondaire comprend les multicouches 11 et 2c.

Dans ce cas, la couche 7 favorisant l'adhésion est déposée sur la dernière couche de barrière, ici la couche 2c.

Chaque compartiment secondaire comprend au moins une couche fonctionnelle. Par couche fonctionnelle, on entend une couche qui présente des propriétés remarquables chimique, physique ou biologique. Il peut s'agir, uniquement à titre d'exemple, d'affinité chimique, d'hydrophobie, de dureté, de résistance mécanique, de propriétés de biocompatibilité ou bactéricides.

Sur la figure 3, la multicouche 8 de renfort mécanique comprend une matrice 10 de polyélectrolyte incorporant des feuillets 9 d'argile exfoliée. Dans une telle multicouche, les propriétés de résistance mécanique des feuillets 9 d'argile exfoliée sont conférées à l'ensemble de la multicouche 8 de renfort mécanique par l'intermédiaire de la matrice 10 de polyélectrolyte. On peut utiliser un autre agent fonctionnel conférant un renfort mécanique, par exemple, des nanotubes de carbone ou des nanoparticules céramiques.

La multicouche 8 de renfort mécanique peut être réalisée, par exemple, en alternant le dépôt d'un polyélectrolyte cationique, comme un PAH, et celui de feuillets d'argile exfoliée, par exemple de la montmorillonite, ou d'un autre composé inorganique exfoliable chargé présentant des propriétés mécaniques adéquates.

La structure de la figure 3 comprend une autre multicouche fonctionnelle qui est une multicouche colorante 11. Une matrice de polyélectrolyte 13 incorpore des pigments 12, pouvant être organiques ou inorganiques, sous la forme de nanoparticules.

La multicouche colorante 11 peut être réalisée en alternant le dépôt d'un polyélectrolyte cationique comme le PAH et d'un polyélectrolyte anionique comme le PAA. Suivant la nature du pigment coloré, il sera co-adsorbé avec les polyélectrolytes ou sera introduit par diffusion dans la multicouche formée. Le pigment coloré sera sous la forme, par exemple, de nanoparticules et sera, par exemple, du bleu de Nile, des coumarines chargées, des fluorescéines, des phtalocyanines, des pyrènes, des nanoparticules organiques ou inorganiques dont la couleur dépend de la taille.

Les différents compartiments sont séparés par des multicouches 2a, 2b et 2c de barrière à la diffusion permettant de limiter la migration d'un agent dopant d'une multicouche à l'autre. Parmi les agents dopants présents dans ce mode de réalisation, on peut citer les agents anticorrosion, les agents de renforts mécaniques et les pigments.

Les multicouches sont élaborées selon la technologie couche-par-couche (lbl). Une multicouche comprend au moins une matrice et peut comprendre un ou plusieurs agents fonctionnels.

Le procédé de préparation d'une structure selon l'invention consiste à déposer sur un substrat plusieurs multicouches ayant chacune un rôle fonctionnel distinct. Chaque multicouche est elle-même réalisée par l'exécution d'un procédé de dépôt de type couche-par-couche, comprenant les étapes (i) à (ix) telles que décrites ci-dessus.

Le procédé de réalisation d'une structure selon l'invention comprend une succession d'étapes au cours desquelles on exécute le procédé de dépôt précédemment décrit avec des premières et deuxièmes solutions de dépôt différentes et dépendantes des propriétés des couches à réaliser.

Dans un mode de réalisation de l'invention, illustré sur la figure 3, la structure multicouche est réalisée sur un substrat 5, par exemple en aluminium, à l'aide du procédé précédemment décrit.

La couche 6 d'adhésion est une couche de polyélectrolyte (anionique ou cationique) permettant d'assurer une bonne adhésion sur le substrat 5. L'adhésion est favorisée d'une part via les interactions électrostatiques et d'autre part par des interactions chimiques. Par exemple, une couche de poly(acide acrylique) (PAA) peut former un complexe avec les oxydes natifs d'aluminium. La couche 6 est déposée à partir d'une solution de polyélectrolyte, en suivant les étapes (i), (ii), (iii) et (iv) décrites précédemment.

La multicouche 1 dopée en agent anticorrosion est réalisée par dépôt successif d'un polyélectrolyte cationique tel que le poly(chlorhydrate d'allylamine) (PAH) et d'un agent anticorrosion 4. L'agent anticorrosion peut être sous la forme de nano-particules d'oxyde métallique chargées négativement, par exemple de CeO₂. Le dépôt de la multicouche 1 dopée en agent anticorrosion est réalisé en exécutant les étapes suivantes :
(i') on prépare une première solution (I) d'un premier polyélectrolyte, une deuxième solution (II) d'agent anticorrosion de charge opposée au premier polyélectrolyte ou une deuxième solution (II') comprenant le mélange d'un second polyélectrolyte de charge opposée au premier polyélectrolyte et d'agent anticorrosion,
(ii') on fait adsorber une couche de la solution (I) préparée dans l'étape (i'), sur la couche 6 d'adhésion, par exemple par trempage-retrait du substrat recouvert,
(iii') on rince la surface dans le solvant utilisé pour la solution (I) afin d'éliminer l'excès de solution (I),
(iv') on fait sécher la couche,
(v') on dépose la solution (II) ou (II') préparée dans l'étape (i'), par exemple par trempage-retrait,
(vi') on rince dans le solvant utilisé pour la solution (II) ou (II') afin d'éliminer l'excès de solution (II) ou (II'),
(vii') on fait sécher,
(viii')on répète les étapes (ii') à (vii') n fois, et
(ix') on dépose une dernière couche avec la solution (I) par exécution des étapes (ii'), (iii') et (iv').
On obtient de préférence une épaisseur de multicouche 1 de polyélectrolyte(s) dopée en agent anticorrosion allant tout particulièrement de 10 à 100 nm, mieux encore de 10 à 50 nm. Les étapes (ii') à (vii') sont répétées n fois, n allant en particulier de 5 à 20, mieux encore de 5 à 10 et encore plus préférentiellement n est égal à 10.

Par exemple, la première solution (I) peut être une solution aqueuse de polyélectrolyte cationique comme le poly(chlorhydrate d'allylamine) (PAH) et la seconde solution peut être une solution (II) aqueuse de nanoparticules d'oyde métallique chargées négativement ou une solution (II') de ces mêmes nanoparticules associées à un polyélectrolyte anionique tel le PAA.

D'autres agents anticorrosion dispersables dans l'eau peuvent aussi être rajoutés par simple co-adsorption.

La multicouche 2a de barrière à la diffusion comprenant des polyélectrolytes réticulés est déposée sur la multicouche 1. La multicouche 2a joue un rôle de barrière pour limiter la diffusion des agents dopants entre les différents compartiments fonctionnels.

Le dépôt de la multicouche 2a est réalisé en exécutant les étapes suivantes :
(i") on prépare une première solution (III) de polyélectrolyte, par exemple anionique comme le PAA, et une deuxième solution (IV) de polyélectrolyte de charge opposée au premier polyélectrolyte, par exemple cationique comme le PAH. Les concentrations de polyélectrolyte, exprimées en monomères, sont comprises de préférence dans l'intervalle allant de 10⁻³ à 5x10⁻² mol/l (ou M). Par exemple, elle peut être égale à 0,01 M en monomères.
(ii") on fait adsorber une couche de la solution (III) préparée dans l'étape (i"), sur la multicouche 1, par exemple par trempage-retrait du substrat recouvert,
(iii") on rince la surface dans le solvant utilisé pour la solution (III) afin d'éliminer l'excès de solution (III),
(iv") on fait sécher la couche,
(v") on dépose la solution (IV) préparée dans l'étape (i"),
(vi") on rince dans le solvant utilisé pour la solution (IV) afin d'éliminer l'excès de solution (IV),
(vii") on fait sécher,
(viii") on répète les étapes (ii") à (vii") m fois, et
(ix") on dépose une dernière couche avec la solution (III) par exécution des étapes (ii"), (iii") et (iv").
On obtient de préférence une épaisseur de multicouche 2a allant de préférence de 2 à 50 nm, mieux encore de 2 à 20 nm. Les étapes (ii") à (vii") sont répétées m fois, m allant en particulier de 1 à 20, mieux encore de 1 à 10 et encore plus préférentiellement m est égal à 5.

Les dépôts de couches se font, par exemple, en présence des agents de réticulation 1-éthyl-3-diméthylaminopropyl carbodiimide (EDC) et de N-hydroxysuccinimide (NHS). Ces agents de réticulation (EDC et NHS) peuvent être rajoutés pendant toutes les étapes de dépôt ou seulement pendant certaines d'entre elles.

La multicouche 8 de renfort mécanique permettant d'améliorer la résistance mécanique est réalisée par dépôts successifs d'un polyélectrolyte cationique et d'un agent conférant un renfort mécanique 9. Le polyélectrolyte cationique est, par exemple, du PAH et l'agent conférant un renfort mécanique 9 peut être des feuillets 9 d'argile préparés à partir de montmorillonite ou un autre composé inorganique. La multicouche 8 est obtenue en préparant tout d'abord une solution aqueuse de polyélectrolyte cationique et une solution aqueuse d'un agent conférant un renfort mécanique dans l'étape (i), puis en répétant successivement p fois les étapes (ii) à (vii) telles que décrites ci-dessus et en effectuant l'étape (ix). Le nombre de répétition des étapes (ii) à (vii), noté ici p, est, par exemple, compris dans l'intervalle allant de 5 à 20, de préférence de 5 à 10, mieux encore p est égal à dix.

La multicouche 2b jouant le rôle de barrière pour limiter la diffusion des agents dopants entre les différents compartiments fonctionnels, est ensuite déposée de la même manière que la multicouche 2a.

La multicouche colorante 11 de la figure 3 est ensuite réalisée par dépôts successifs d'un polyélectrolyte anionique tel que le PAA, et d'un polyélectrolyte cationique tel que le PAH, en présence d'un pigment 12. Le pigment 12 peut être organique, par exemple, sous forme de nano-particules. Le pigment 12 est déposé par co-adsorption. Pour déposer une telle multicouche colorante 11, on peut utiliser par exemple du PAH et PAA avec le Nile Blue, des coumarines chargées ou des fluorescéines ou d'autres composés tels que ceux cités plus haut. Suivant la nature du pigment coloré, il sera co-adsorbé avec les polyélectrolytes ou sera introduit par diffusion dans la multicouche formée.

On réalise le dépôt en partant de l'étape (i), c'est-à-dire en préparant des solutions aqueuses séparées de PAA et de PAH, suivie de la succession d'étapes (ii) à (vii) telles que décrites ci-dessus, répétées r fois, puis éventuellement de la réalisation de l'étape (ix). Le nombre de répétition des étapes (ii) à (vii), noté ici r, est par exemple, compris dans l'intervalle allant de 5 à 20, de préférence de 5 à 10, mieux encore r est égal à dix.

La multicouche 2c jouant le rôle de barrière pour limiter la diffusion des agents dopants entre les différents compartiments fonctionnels, est ensuite déposée de la même manière que les multicouches 2a et 2b.

La couche 7 favorisant l'adhérence entre la multicouche 2c et un éventuel traitement ultérieur (ou « top coat ») est ensuite déposée. Une telle couche peut comprendre un polyélectrolyte anionique ou un polyélectrolyte cationique, et plus particulièrement, un PAH et un vernis à base époxyde. Le dépôt est réalisé en répétant successivement les étapes (ii), (iii) et (iv) telles que décrites ci-dessus.

Dans un autre mode de réalisation de l'invention, les agents fonctionnels utilisés dans l'élaboration des différentes couches peuvent être regroupés dans un seul compartiment. Par exemple, on peut déposer, en utilisant la technologie lbl :
- une première couche d'adhésion au substrat, le substrat étant par exemple en aluminium,
- une première multicouche de barrière à la diffusion des agents dopants,
- une multicouche à base de PAH et de plaquettes d'argile, puis par co-adsorption un agent de corrosion et un colorant dans un compartiment,
- une deuxième multicouche de barrière à la diffusion des agents dopants, et
- une couche d'adhésion au vernis.

## Revendications

1. Revêtement anticorrosion nanostructuré à base de polyélectrolytes, comprenant au moins un compartiment principal qui comporte :
- une multicouche (1) de polyélectrolyte(s) dopée avec au moins un agent anticorrosion (4), et
- une multicouche (2a) supérieure jouant le rôle de barrière à la diffusion des agents dopants, déposée selon la technologie couche-par couche, et dont la surface supérieure correspond à la surface supérieure du compartiment principal.

2. Revêtement anticorrosion selon la revendication 1, **caractérisé en ce qu'**au moins un agent anticorrosion (4) est sous forme de nanoparticules d'oxyde métallique ou de sel métallique, présentant de préférence une taille allant de 1 à 50 nm.

3. Revêtement anticorrosion selon la revendication 2, **caractérisé en ce que** les nanoparticules sont choisies parmi les nanoparticules d'oxyde de cérium, d'oxyde de manganèse, d'oxyde de cobalt, d'oxyde de phosphate, d'oxyde de zinc, d'oxyde de molybdène ou d'oxyde de vanadium, ou de sels de terres rares, ou leurs mélanges.

4. Revêtement anticorrosion selon l'une quelconque des revendications précédentes, **caractérisé en ce que** la multicouche (1) de polyélectrolyte(s) dopée en agent(s) anticorrosion (4) comprend un polyélectrolyte cationique ou un polyélectrolyte anionique ou une alternance de couches de polyélectrolytes anionique et cationique.

5. Revêtement anticorrosion selon l'une quelconque des revendications précédentes, **caractérisé en ce que** le compartiment principal comprend au moins un agent fonctionnel différent d'un agent anticorrosion.

6. Revêtement anticorrosion selon l'une quelconque des revendications précédentes, **caractérisé en ce qu'**il comprend une multicouche inférieure jouant le rôle de barrière à la diffusion des agents dopants, et dont la surface inférieure correspond à la surface inférieure du compartiment.

7. Revêtement anticorrosion selon l'une quelconque des revendications précédentes, **caractérisé en ce qu'**il comprend un ou plusieurs compartiments secondaires, comportant chacun :
- une multicouche (8 ; 11) de polyélectrolyte(s) dopée avec au moins un agent fonctionnel différent d'un agent anticorrosion, et
- une multicouche (2b ; 2c) supérieure jouant le rôle de barrière à la diffusion des agents dopants, et dont la surface supérieure correspond à la surface supérieure du compartiment secondaire.

8. Revêtement anticorrosion selon l'une quelconque des revendications précédentes, **caractérisé en ce que** la multicouche (2a ; 2b ; 2c) jouant le rôle de barrière à la diffusion des agents dopants comprend un polyélectrolyte anionique et un polyélectrolyte cationique réticulés de préférence par voie thermique ou en présence d'un ou plusieurs agents de réticulation.

9. Revêtement anticorrosion selon l'une quelconque des revendications 5 à 8, **caractérisé en ce que** l'agent fonctionnel différent de l'agent anticorrosion confère au compartiment une résistance aux rayures et frottements, une tenue mécanique, un caractère hydrophobe, une coloration ou un effet bactéricide.

10. Revêtement anticorrosion selon la revendication 9, **caractérisé en ce que** le ou les agents fonctionnels différents de l'agent anticorrosion est ou sont choisis parmi les alcoxydes de titane ou d'aluminium, des nanoparticules de silice ou d'alumine, des oxydes de titane ou de zirconium ; des plaquettes ou feuillets d'argile exfoliée, des nanotubes de carbone ou des nanoparticules inorganiques ou céramiques ; les oxydes de zirconium, des polymères ou des copolymères fluorés ; le Bleu de Nile, les coumarines, les fluoréscéines, les phtalocyanines et des pyrènes ; des peptides anti-bactériens et des sels métalliques.

11. Revêtement anticorrosion selon l'une quelconque des revendications précédente, **caractérisé en ce qu'**il comprend une couche (7) favorisant l'adhérence d'un traitement de surface ultérieur.

12. Revêtement anticorrosion selon la revendication 4 ou 8, **caractérisé en ce que** le polyélectrolyte cationique est choisi parmi les polymères à groupements amines comme un poly(chlorhydrate d'allylamine), un poly(éthylène imine) et le chitosane ; les polymères à groupements ammonium quaternaire tels que un poly(chlorure de diallyl diméthylammonium) et un poly(chlorure de vinylbenzyltrimethylammonium) ; et les polymères à groupements pyridine ou pyridinium comme une poly(N-méthylvinylpyridine).

13. Revêtement anticorrosion selon la revendication 4 ou 8, **caractérisé en ce que** le polyélectrolyte anionique est choisi parmi les polyacides comme un poly(acide acrylique) ou un poly(acide méthacrylique) ; les polymères à groupements sulfonate comme un poly(styrène sulfonate), un poly(sulfonate de vinyle) et un poly(éther-éther-cétone) sulfoné ; les polymères à groupements sulfates tels que un poly(sulfate de vinyle), les polymères à groupements phosponates ou phosphates ; et les polysaccharides anioniques.

14. Structure comprenant :
- un substrat (5), et
- un revêtement anticorrosion nanostructuré à base de polyélectrolytes selon l'une quelconque des revendications précédentes.

15. Structure selon la revendication 14, **caractérisé en ce que** le substrat (5) est un substrat métallique ou un substrat composite.

16. Structure selon la revendication 15, **caractérisé en ce que** le substrat métallique (5) est en aluminium ou un de ses alliages, en titane ou en magnésium.

17. Structure selon l'une quelconque des revendications 14 à 16, **caractérisée en ce qu'**elle comprend une couche (6) d'adhésion au substrat (5), à base de polyélectrolyte, entre le substrat (5) et le revêtement anticorrosion nanostructuré.

18. Structure selon la revendication 17, **caractérisée en ce que** la couche (6) d'adhésion au substrat (5) comprend un polyélectrolyte cationique ou un polyélectrolyte anionique.

19. Utilisation du revêtement selon l'une quelconque des revendications 1 à 13, pour améliorer la résistance à la corrosion, aux rayures et aux frottements, la tenue mécanique, le caractère hydrophobe et/ou la coloration d'un substrat (5) métallique ou non métallique dans le domaine aéronautique ou aérospatial.

20. Procédé de réalisation d'une structure telle que définie par l'une quelconque des revendications 14 à 18, **caractérisé en ce qu'**il comprend des étapes de préparation d'un compartiment principal, au cours desquelles :
(a) on dépose une multicouche (1) de polyélectrolyte(s) dopée avec au moins un agent anticorrosion (4) et éventuellement dopée avec au moins un agent fonctionnel différent d'un agent anticorrosion, sur un substrat (5), selon la technologie couche-par-couche, et
(b) on dépose une multicouche (2a) supérieure jouant le rôle de barrière à la diffusion des agents dopants, selon la technologie couche-par-couche.

21. Procédé selon la revendication 20 comprenant une étape avant l'étape (a), au cours de laquelle on dépose une couche d'adhésion (6) au substrat (5).

22. Procédé selon la revendication 20 ou 21, **caractérisé en ce qu'**il comprend des étapes de préparation d'un compartiment secondaire, au cours desquelles :
(c) on dépose une multicouche (8) dopée avec au moins un agent fonctionnel différent d'un agent anticorrosion sur la multicouche (2a), selon la technologie couche-par-couche, et
(d) on dépose une multicouche (2b) supérieure jouant le rôle de barrière à la diffusion des agents dopants, selon la technologie couche-par-couche,
ces deux étapes (c) et (d) étant répétées une à plusieurs fois.

23. Procédé selon l'une quelconque des revendications 20 à 22, **caractérisé en ce que** l'on dépose une couche (7) favorisant l'adhérence d'un traitement de surface ultérieur.

24. Procédé selon l'une quelconque des revendications 20 à 23, **caractérisé en ce que** chaque multicouche est déposée à l'aide du procédé comprenant les étapes suivantes, qui consistent à :
(i) préparer :
- une première solution aqueuse ou contenant un ou des solvants polaires, de préférence une solution aqueuse, la première solution comprenant un polyélectrolyte, et
- une deuxième solution aqueuse ou contenant un ou des solvants polaires, de préférence une solution aqueuse, la deuxième solution comprenant au moins un agent dopant de charge opposée au polyélectrolyte de la première solution, un polyélectrolyte de charge opposée au polyélectrolyte de la première solution, ou encore un de leurs mélanges,
(ii) faire adsorber une couche de la première solution préparée dans l'étape (i), sur la surface à couvrir,
(iii) rincer la surface dans le solvant utilisé pour la première solution afin d'éliminer l'excès de première solution,
(iv) faire sécher la couche,
(v) déposer une deuxième solution préparée dans l'étape (i),
(vi) rincer dans le solvant utilisé pour la deuxième solution afin d'éliminer l'excès de deuxième solution,
(vii) faire sécher, notamment de façon thermique, par un jet de gaz neutre tel que l'azote ou de l'air comprimé filtré, ou en combinant les deux techniques,
(viii) répéter les étapes (ii) à (vii), et
(ix) éventuellement à exécuter une dernière fois les étapes (ii) à (iv),
jusqu'à obtenir l'épaisseur souhaitée.

25. Procédé selon la revendication 24, **caractérisé en ce que** l'on répète les étapes (ii) à (vii) de 1 à 20 fois.

26. Procédé selon la revendication 24 ou 25, **caractérisé en ce que** les étapes (ii), (iii), (v) et (vi) sont effectuées par trempage-retrait, pulvérisation, aspersion ou dépôt sur substrat en rotation.

27. Procédé selon l'une quelconque des revendications 24 à 26, **caractérisé en ce que** le séchage est réalisé de façon thermique, par un jet de gaz neutre qui est de préférence l'azote ou l'air comprimé filtré, ou en combinant les deux techniques.

28. Procédé selon l'une quelconque des revendications 20 à 27, **caractérisé en ce que** la couche (6) d'adhésion au substrat et la couche (7) favorisant l'adhérence d'un traitement de surface ultérieur sont déposées suivant les étapes (i) à (iv) telles que définies dans l'une quelconque des revendications 24 et 26 à 27.

## Patentansprüche

1. Nanostrukturierte Antikorrosionsbeschichtung auf Basis von Polyelektrolyten, umfassend mindestens ein Hauptkompartiment, das Folgendes umfasst:
- eine Multischicht (1) aus Polyelektrolyt(en), die mit mindestens einem Antikorrosionsmittel (4) dotiert ist, und
- eine obere Multischicht (2a), die als Barriere gegen die Diffusion von Dotierungsmitteln wirkt, die gemäß der Layer-by-Layer-Technologie abgeschieden wird und deren obere Oberfläche der oberen Oberfläche des Hauptkompartiments entspricht.

2. Antikorrosionsbeschichtung nach Anspruch 1, **dadurch gekennzeichnet, dass** mindestens ein Antikorrosiansmittel (4) in Form von Metalloxid- oder Metallsalz-Nanopartikeln vorliegt, die bevorzugt eine Größe im Bereich von 1 bis 50 nm aufweisen.

3. Antikorrosionsbeschichtung nach Anspruch 2, **dadurch gekennzeichnet, dass** die Nanopartikel ausgewählt sind aus Nanopartikeln aus Ceroxid, Manganoxid, Cobaltoxid, Phosphatoxid, Zinkoxid, Molybdänoxid oder Vanadiumoxid, oder Salze von seltenen Erden oder deren Gemische.

4. Antikorrosionsbeschichtung nach einem der vorhergehenden Ansprüche, **dadurch gekennzeichnet, dass** die Multischicht (1) aus Polyelektrolyt(en), die mit Antikorrosionsmittel(n) (4) dotiert ist, einen kationischen Polyelektrolyten oder einen anionischen Polyelektrolyten oder eine Abfolge von Schichten aus anionischen und kationischen Polyelektrolyten umfasst.

5. Antikorrosionsbeschichtung nach einem der vorhergehenden Ansprüche, **dadurch gekennzeichnet, dass** das Hauptkompartiment mindestens ein funktionelles Mittel umfasst, das kein Antikorrosionsmittel ist.

6. Antikorrosionsbeschichtung nach einem der vorhergehenden Ansprüche, **dadurch gekennzeichnet, dass** sie eine untere Multischicht umfasst, die als Barriere gegen die Diffusion von Dotierungsmitteln wirkt und deren untere Oberfläche der unteren Oberfläche des Kompartiments entspricht.

7. Antikorrosionsbeschichtung nach einem der vorhergehenden Ansprüche, **dadurch gekennzeichnet, dass** sie ein oder mehrere sekundäre Kompartimente umfasst, die jeweils Folgendes umfassen:
- eine Multischicht (8; 11) aus Polyelektrolyt(en), die mit mindestens einem funktionellen Mittel, das kein Antikorrosionsmittel ist, dotiert ist, und
- eine obere Multischicht (2b; 2c), die als Barriere gegen die Diffusion von Dotierungsmitteln wirkt, und deren obere Oberfläche der oberen Oberfläche des sekundären Kompartiments entspricht.

8. Antikorrosionsbeschichtung nach einem der vorhergehenden Ansprüche, **dadurch gekennzeichnet, dass** die Multischicht (2a; 2b; 2c), die als Barriere gegen die Diffusion von Dotierungsmitteln wirkt, einen anionischen Polyelektrolyten und einen kationischen Polyelektrolyten umfasst, die bevorzugt thermisch oder in Gegenwart eines oder mehrerer Vernetzungsmittel vernetzt sind.

9. Antikorrosionsbeschichtung nach einem der Ansprüche 5 bis 8, **dadurch gekennzeichnet, dass** das funktionelle Mittel, das kein Antikorrosionsmittel ist, dem Kompartiment Kratzfestigkeit und Abriebbeständigkeit, mechanische Festigkeit, Hydrophobie, Färbung oder eine bakterizide Wirkung verleiht.

10. Antikorrosionsbeschichtung nach Anspruch 9, **dadurch gekennzeichnet, dass** das oder die funktionelle(n) Mittel, das/die kein Antikorrosionsmittel ist/sind, aus Titan- oder Aluminiumalkoxiden, Siliciumdioxid- oder Aluminiumoxid-Nanopartikeln, Titan- oder Zirconiumoxiden; Blähtonplättchen oder -blättchen, Kohlenstoffnanoröhrchen oder anorganischen oder keramischen Nanopartikeln; Zirkoniumoxiden, fluorierten Polymeren oder Copolymeren; Nilblau, Coumarinen, Fluoresceinen, Phtalocyaninen und Pyrenen; antibakteriellen Peptiden und Metallsalzen ausgewählt ist oder sind.

11. Antikorrosionsbeschichtung nach einem der vorhergehenden Ansprüche, **dadurch gekennzeichnet, dass** sie eine Schicht (7) umfasst, die die Adhäsion einer anschließende Oberflächenbehandlung fördert.

12. Antikorrosionsbeschichtung nach einem der Ansprüche 4 oder 8, **dadurch gekennzeichnet, dass** der kationische Polyelektrolyt ausgewählt ist aus Polymeren mit Amingruppen, wie Polyallylamin-Hydrochlorid, Polyethylenimin und Chitosan; Polymeren mit quaternären Ammoniumgruppen, wie beispielsweise Polydiallyldimethylammoniumchlorid und Polyvinylbenzyltrimethylammoniumchlorid; und Polymeren mit Pyridin- oder Pyridiniumgruppen, wie N-Polymethylvinylpyridin.

13. Antikorrosionsbeschichtung nach einem der Ansprüche 4 oder 8, **dadurch gekennzeichnet, dass** der anionische Polyelektrolyt ausgewählt ist aus Polysäuren, wie Polyacrylsäure oder Polymethacrylsäure; Polymeren mit Sulfonatgruppen, wie Polystyrolsulfonat, Polyvinylsulfonat und sulfoniertem Polyetheretherketon; Polymeren mit Sulfatgruppen, wie beispielsweise Polyvinylsulfat, Polymeren mit Phosponat- oder Phosphatgruppen; und anionischen Polysacchariden.

14. Struktur, umfassend:
- ein Substrat (5) und
- eine nanostrukturierte Antikorrosionsbeschichtung auf Basis von Polyelektrolyten nach einem der vorhergehenden Ansprüche.

15. Struktur nach Anspruch 14, **dadurch gekennzeichnet, dass** es sich bei dem Substrat (5) um ein Metall- oder ein Verbundsubstrat handelt,

16. Struktur nach Anspruch 15, **dadurch gekennzeichnet, dass** das Metallsubstrat (5) aus Aluminium oder einer Aluminiumlegierung, aus Titan oder aus Magnesium ist.

17. Struktur nach einem der Ansprüche 14 bis 16, **dadurch gekennzeichnet, dass** sie eine Schicht (6) zur Adhäsion an das Substrat (5) auf Basis von Polyelektrolyt, zwischen dem Substrat (5) und der nanostrukturierten Antikorrosionsbeschichtung umfasst.

18. Struktur nach Anspruch 17, **dadurch gekennzeichnet, dass** die Schicht (6) zur Adhäsion an das Substrat (5) einen kationischen Polyelektrolyten oder einem anionischen Polyelektrolyten umfasst.

19. Verwendung der Beschichtung nach einem der Ansprüche 1 bis 13, um die Korrosionsbeständigkeit, die Kratzfestigkeit und die Abriebbeständigkeit, die mechanische Festigkeit, die Hydrophobie und/oder die Färbung eines metallischen oder nichtmetallischen Substrats (5) im Luft- und Raumfahrtsektor zu verbessern.

20. Verfahren zum Herstellen einer Struktur, wie von einem der Ansprüche 14 bis 18 definiert, **dadurch gekennzeichnet, dass** es Schritte zum Fertigen eines Hauptkompartiments umfasst, worin:
(a) eine Multischicht (1) aus Polyelektrolyt(en), die mit mindestens einem Antikorrosionsmittel (4) dotiert ist und gegebenenfalls mit mindestens einem funktionellen Mittel dotiert ist, das kein Antikorrosionsmittel ist, auf einem Substrat (5) gemäß der Layer-by-Layer-Technologie abgeschieden wird, und
(b) eine obere Multischicht (2a), die als Barriere gegen die Diffusion von Dotierungsmittel wirkt, gemäß der Layer-by-Layer-Technologie abgeschieden wird.

21. Verfahren nach Anspruch 20, umfassend einen Schritt, vor dem Schritt (a), worin eine Schicht zur Adhäsion (6) an das Substrat (5) abgeschieden wird.

22. Verfahren nach Anspruch 20 oder 21, **dadurch gekennzeichnet, dass** es Schritte zum Fertigen eines sekundären Kompartiments umfasst, worin:
(c) eine Multischicht (8), die mit mindestens einem funktionellen Mittel, das kein Antikorrosionsmittel ist, dotiert ist, auf der Multischicht (2a) gemäß der Layer-by-Layer-Technologie abgeschieden wird, und
(d) eine obere Multischicht (2b), die als Barriere gegen die Diffusion der Dotierungsmittel wirkt, gemäß der Layer-by-Layer-Technologie abgeschieden wird,
wobei diese beiden Schritte (c) und (d) ein Mal bis mehrmals wiederholt werden.

23. Verfahren nach einem der Ansprüche 20 bis 22, **dadurch gekennzeichnet, dass** eine Schicht (7) abgeschieden wird, die die Adhäsion einer anschließenden Oberflächenbehandlung fördert.

24. Verfahren nach einem der Ansprüche 20 bis 23, **dadurch gekennzeichnet, dass** jede Multischicht mithilfe des Verfahrens abgeschieden wird, das die folgenden Schritte umfasst, die darin bestehen:
(i) herzustellen:
- eine erste wässrige oder ein oder mehrere polare Lösemittel enthaltende Lösung, bevorzugt eine wässrige Lösung, wobei die erste Lösung einen Polyelektrolyten umfasst, und
- eine zweite wässrige oder ein oder mehrere polare Lösemittel enthaltende Lösung, bevorzugt eine wässrige Lösung, wobei die zweite Lösung mindestens ein Dotierungsmittel mit entgegengesetzter Ladung zum Polyelektrolyten der ersten Lösung, einen Polyelektrolyten mit entgegengesetzter Ladung zum Polyelektrolyten der ersten Lösung, oder auch eines ihrer Gemische umfasst,
(ii) eine Schicht der ersten Lösung, die in Schritt (i) hergestellt wurde, auf der zu bedeckenden Oberfläche adsorbieren zu lassen,
(iii) die Oberfläche in dem Lösemittel, das für die erste Lösung verwendet wird, zu spülen, um die überschüssige erste Lösung zu entfernen,
(iv) die Schicht trocknen lassen,
(v) eine zweite Lösung, die in Schritt (i) hergestellt wurde, abzuscheiden
(vi) in dem Lösemittel, das für die zweite Lösung verwendet wird, zu spülen, um die überschüssige zweite Lösung zu entfernen,
(vii) insbesondere thermisch, mit einem Neutralgasstrahl, wie beispielsweise Stickstoff oder filtrierter Druckluft, oder durch die Kombination beider Techniken trocknen zu lassen,
(viii) die Schritte (ii) bis (vii) zu wiederholen und
(ix) gegebenenfalls ein letztes Mal die Schritte (ii) bis (iv) bis zum Erhalt der gewünschten Dicke auszuführen.

25. Verfahren nach Anspruch 24, **dadurch gekennzeichnet, dass** die Schritte (ii) bis (vii) 1 bis 20 Mal wiederholt werden.

26. Verfahren nach Anspruch 24 oder 25, **dadurch gekennzeichnet, dass** die Schritte (ii), (iii), (v) und (vi) durch Tauchziehen, Zerstäuben, Flutbeschichten oder Rotationsbeschichtung durchgeführt werden.

27. Verfahren nach einem der Ansprüche 24 bis 26, **dadurch gekennzeichnet, dass** die Trocknung thermisch, durch einen Neutralgasstrom, bei dem es sich bevorzugt um Stickstoff oder filtrierte Druckluft handelt, oder durch die Kombination beider Techniken ausgeführt wird.

28. Verfahren nach einem der Ansprüche 20 bis 27, **dadurch gekennzeichnet, dass** die Schicht (6) zur Adhäsion auf dem Substrat und die Schicht (7), die die Adhäsion einer anschließenden Oberflächenbehandlung fördert, gemäß den Schritten (i) bis (iv) abgeschieden werden, wie in einem der Ansprüche 24 und 26 bis 27 definiert.

## Claims

1. Polyelectrolyte-based nanostructured anticorrosion coating, comprising at least one main compartment which comprises:
- a polyelectrolyte multilayer (1) doped with at least one anticorrosion agent (4), and
- an upper multilayer (2a) acting as a barrier to the diffusion of the dopants, deposited according to the layer-by-layer technique, and whose upper surface corresponds to the upper surface of the main compartment.

2. Anticorrosion coating according to Claim 1, **characterized in that** at least one anticorrosion agent (4) is in the form of nanoparticles of a metal oxide or of a metal salt, preferably having a size ranging from 1 to 50 nm.

3. Anticorrosion coating according to Claim 2, **characterized in that** the nanoparticles are chosen from nanoparticles of cerium oxide, manganese oxide, cobalt oxide, phosphate oxide, zinc oxide, molybdenum oxide or vanadium oxide, or of rare-earth metal salts, or mixtures thereof.

4. Anticorrosion coating according to any one of the preceding claims, **characterized in that** the polyelectrolyte multilayer (1) doped with anticorrosion agent(s) (4) comprises a cationic polyelectrolyte or an anionic polyelectrolyte of an alternation or layers of anionic and cationic polyelectrolytes.

5. Anticorrosion coating according to any one of the preceding claims, **characterized in that** the main compartment comprises at least one functional agent other than an anticorrosion agent.

6. Anticorrosion coating according to any one of the preceding claims, **characterized in that** it comprises a lower multilayer that acts as a barrier to the diffusion of the dopants, and whose lower surface corresponds to the lower surface of the compartment.

7. Anticorrosion coating according to any one of the preceding claims, **characterized in that** it comprises one or more secondary compartments, each comprising:
- a polyelectrolyte multilayer (8; 11) doped with at least one functional agent other than an anticorrosion agent, and
- an upper multilayer (2b; 2c) acting as a barrier to the diffusion of the dopants, and whose upper surface corresponds to the upper surface of the secondary compartment.

8. Anticorrosion coating according to any one of the preceding claims, **characterized in that** the multilayer (2a; 2b; 2c) acting as a barrier to the diffusion of the dopants comprises an anionic polyelectrolyte and a cationic polyelectrolyte, that are crosslinked, preferably thermally or in the presence of one or more crosslinking agents.

9. Anticorrosion coating according to any one of Claims 5 to 8, **characterized in that** the functional agent other than the anticorrosion agent gives the compartment scratch resistance, friction resistance, mechanical strength, a hydrophobic nature, a color or a bactericidal effect.

10. Anticorrosion coating according to Claim 9, **characterized in that** the functional agent(s) other than the anticorrosion agent are chosen from titanium or aluminum alkoxides, silica or alumina nanoparticles, titanium or zirconium oxides; exfoliated clay platelets or leaflets, carbon nanotubes or inorganic or ceramic nanoparticles; zirconium oxides, fluorinated polymers or copolymers; Nile blue, coumarins, fluoresceins, phthalocyanins and pyrenes; antibacterial peptides and metal salts.

11. Anticorrosion coating according to any one of the preceding claims, **characterized in that** it comprises a layer (7) that promotes the adhesion of a subsequent surface treatment.

12. Anticorrosion coating according to Claim 4 or 8, **characterized in that** the cationic polyelectrolyte is chosen from polymers containing amine groups, for instance a poly(allylamine hydrochloride), a poly(ethyleneimine) and chitosan; polymers containing quaternary ammonium groups such as a poly(diallyldimethylammonium chloride) and a poly-(vinylbenzyltrimethylammonium chloride); and polymers containing pyridine or pyridinium groups, such as a poly(N-methylvinylpyridine).

13. Anticorrosion coating according to Claims 4 or 8, **characterized in that** the anionic polyelectrolyte is chosen from polyacids, such as a poly(acrylic acid) or a poly(methacrylic acid); polymers containing sulfonated groups, such as a poly(styrene sulfonate), a poly(vinyl sulfonate) and a sulfonated poly(ether ether ketone); polymers containing sulfate groups such as a poly(vinyl sulfate), polymers containing phosphonate or phosphate groups; and anionic polysaccharides.

14. Structure comprising:
- a substrate (5), and
- a polyelectrolyte-based nanostructured anticorrosion coating according to any one of the preceding claims.

15. Structure according to Claim 14, **characterized in that** the substrate (5) is a metallic substrate or a composite substrate.

16. Structure according to Claim 15, **characterized in that** the metallic substrate (5) is made of aluminum or an alloy thereof, of titanium or of magnesium.

17. Structure according to any one of Claims 14 to 16, **characterized in that** it comprises a polyelectrolyte-based layer (6) for adhesion to the substrate (5), between the substrate (5) and the nanostructured anticorrosion coating.

18. Structure according to Claim 17, **characterized in that** the layer (6) for adhesion to the substrate (5) comprises a cationic polyelectrolyte or an anionic polyelectrolyte.

19. Use of the coating according to any one of Claims 1 to 13, for improving the corrosion resistance, scratch resistance, friction resistance, mechanical strength, hydrophobic nature and/or color of a metallic or non-metallic substrate (5) in the aeronautical or aerospace field.

20. Process for preparing a structure as defined by any one of Claims 14 to 18, **characterized in that** it comprises steps for preparing a main compartment, during which:
(a) a polyelectrolyte multilayer (1) doped with at least one anticorrosion agent (4) and optionally doped with at least one functional agent other than an anticorrosion agent, is deposited on a substrate (5), according to the layer-by-layer technique, and
(b) an upper multilayer (2a) that acts as a barrier to the diffusion of the dopants is deposited, according to the layer-by-layer technique.

21. Process according to Claim 20, comprising a step before step (a), during which a layer (6) for adhesion to the substrate (5) is deposited.

22. Process according to Claim 20 or 21, **characterized in that** it comprises steps for preparing a secondary compartment, during which:
(c) a multilayer (8) doped with at least one functional agent other than an anticorrosion agent is deposited on the multilayer (2a), according to the layer-by-layer technique, and
(d) an upper multilayer (2b) that acts as a barrier to the diffusion of the dopants is deposited according to the layer-by-layer technique,
these two steps (c) and (d) being repeated one or more times.

23. Process according to any one of Claims 20 to 22, **characterized in that** a layer (7) that promotes the adhesion of a subsequent surface treatment is deposited.

24. Process according to any one of Claims 20 to 23, **characterized in that** each multilayer is deposited by means of the process comprising the following steps, which consist in:
(i) preparing:
- a first aqueous solution or a solution containing one or more polar solvents, preferably an aqueous solution, the first solution comprising a polyelectrolyte, and
- a second aqueous solution or solution containing one or more polar solvents, preferably an aqueous solution, the second solution comprising at least one dopant of opposite charge to that of the polyelectrolyte of the first solution, a polyelectrolyte of opposite charge to that of the polyelectrolyte of the first solution, or a mixture thereof,
(ii) absorbing a layer of the first solution prepared in step (i) onto the surface to be covered,
(iii) rinsing the surface in the solvent used for the first solution so as to remove the excess of first solution,
(iv) drying the layer,
(v) depositing a second solution prepared in step (i),
(vi) rinsing in the solvent used for the second solution so as to remove the excess of second solution,
(vii) drying, especially thermally, with a stream of neutral gas such as filtered compressed air or nitrogen, or by combining the two techniques,
(viii) repeating steps (ii) to (vii), and
(ix) optionally performing steps (ii) to (iv) a final time, until the desired thickness is obtained.

25. Process according to Claim 24, **characterized in that** steps (ii) to (vii) are repeated from 1 to 20 times.

26. Process according to Claim 24 or 25, **characterized in that** steps (ii), (iii), (v) and (vi) are performed by dipping-removal, spraying, sprinkling or spin-coating substrate.

27. Process according to any one of Claims 24 to 26, **characterized in that** the drying is performed thermally, with a stream of neutral gas which is preferably nitrogen or filtered compressed air, or by combining the two techniques.

28. Process according to any one of Claims 20 to 27, **characterized in that** the layer (6) for adhesion to the substrate and the layer (7) that promotes the adhesion of a subsequent surface treatment are deposited according to steps (i) to (iv) as defined in any one of Claims 24, 26 and 27.
